# EUROPÄISCHE PATENTSCHRIFT

(11) **EP 3 061 098 B1**
(45) Veröffentlichungstag und Bekanntmachung des Hinweises auf die Patenterteilung: **27.12.2017**
(21) Anmeldenummer: 14757846.2
(22) Anmeldetag: 28.08.2014
(51) Int. Cl.: G21B 1/11

(54) **VERFAHREN UND VORRICHTUNG ZUR KONTINUIERLICHEN WIEDERAUFBEREITUNG VON ABGAS EINES FUSIONSREAKTORS**
METHOD AND DEVICE FOR THE CONTINUOUS RE-PROCESSING OF EXHAUST GAS OF A FUSION REACTOR
PROCÉDÉ ET DISPOSITIF DE RETRAITEMENT EN CONTINU DE GAZ DE COMBUSTION D'UN RÉACTEUR À FUSION

(30) Priorität: 06.09.2013 DE 102013109778
(43) Veröffentlichungstag der Anmeldung: 31.08.2016
(73) Patentinhaber: Karlsruher Institut für Technologie, 76131 Karlsruhe (DE)
(72) Erfinder: DAY, Christian, 76863 Herxheim (DE); GIEGERICH, Thomas, 76872 Erlenbach (DE)
(86) Internationale Anmeldenummer: PCT/EP2014/002342
(87) Internationale Veröffentlichungsnummer: WO 2015/032477

(56) Entgegenhaltungen:
- Magaud et al.: "SEPARATION OF THE D/T MIXTURE FROM HELIUMIN FUSION REACTORS USING SUPERPERMEABLE MEMBRANES", Annual Report of theAssociation EURATOM/CEA 2002 , Nr. UT-TBM/FC-SP 2002, Seiten 397-399, XP002732160, France Gefunden im Internet: URL:http://www-fusion-magnetique.cea.fr/ac tualites/ra02/ra02-fc.pdf [gefunden am 2014-11-06]
- KONISHI S: "EARLY EXPERIMENTS OF JAERI FUEL CLEANUP SYSTEM AT THE TRITIUM SYSTEMS TEST ASSEMBLY", FUSION ENGINEERING AND DESIGN, Bd. 18, Nr. 1 / 04, 1. Dezember 1991 (1991-12-01), Seiten 33-37, XP000244264, ELSEVIER SCIENCE PUBLISHERS, AMSTERDAM, NL ISSN: 0920-3796, DOI: 10.1016/0920-3796(91)90103-W
- DAY ET AL.: "The Direct Internal Recycling concept to simplify the fuel cycle of a fusion power plant", FUSION ENGINEERING AND DESIGN, Bd. 88, Nr. 6-8, 14. Juni 2013 (2013-06-14), Seiten 616-620, XP002732161, Switzerland ISSN: 0920-3796, DOI: 10.1016/j.fusengdes.2013.05.026 in der Anmeldung erwähnt
- S. Merli et al.: "Hochrateabscheidung mit einemMikrowellenplasma", , Bd. 25, Nr. 2 April 2013 (2013-04), XP002732162, Weinheim DOI: 10.1002/vipr.201300513 Gefunden im Internet: URL:http://onlinelibrary.wiley.com/doi/10. 1002/vipr.201300513/pdf [gefunden am 2014-11-04] in der Anmeldung erwähnt
- M.L. ZHELUDKEVICH ET AL.: "Superpermeability and pumping of atomic hydrogen through palladium membranes", JOURNAL OF MEMBRANE SCIENCE, Bd. 320, Nr. 1-2, 15. Juli 2008 (2008-07-15), Seiten 528-532, XP002732163, DOI: 10.1016/j.memsci.2008.04.045
- NAKAMURA ET AL.: "Deuterium pumping experiment with superpermeable Nb membrane in JFT-2M tokamak", JOURNAL OF NUCLEAR MATERIALS, Bd. 278, Nr. 2-3, April 2000 (2000-04), Seiten 312-319, XP002732164, DOI: 10.1016/S0022-3115(99)00243-3
- OHYABU ET AL.: "Active Control of Hydrogen Recycling by the Permeation and Absorption Techniques", HYDROGEN RECYCLING AT PLASMA FACING MATERIALS - NATO SCIENCE SERIES, Bd. 1, 2000, Seiten 25-26, XP002732165, Netherlands ISSN: 1568-2609, DOI: 10.1007/978-94-011-4331-8_4 ISBN: 978-94-011-4331-8

## Beschreibung

Die Erfindung betrifft ein Verfahren und eine Vorrichtung zur Wiederaufbereitung des Abgases eines Fusionsreaktors und die Abtrennung der Wasserstoff-Isotopologe aus dem Abgas eines Fusionsreaktors, wobei die Wasserstoff-Isotopologe aus dem Abgas abgetrennt und in den Brennstoffkreislauf rückgeführt werden.

Es ist bekannt, dass ein Fusionsreaktor nicht nur Helium und Energie aus der Fusion von Wasserstoff-Isotopologen erzeugt, sondern durch den Betrieb das Plasma auch Verunreinigungen ansammelt, welches als Abgas abgeführt werden muss. Wasserstoff-Isotopologe sind in diesem Zusammenhang alle möglichen Isotope von Wasserstoff (H) und Kombinationen aus Deuterium (D) und Tritium (T) wie T₂, HT, DT, H₂, D₂, HD.

Unter Abgas wird im nachfolgenden das Gas bezeichnet welches, aus der Brennkammer (Torus) eines Fusionsreaktors abgeführt wird.

Das Abgas besteht hauptsächlich aus unverbranntem Brennstoff, enthält jedoch auch Verunreinigungen als Reaktionsprodukt der Fusionsreaktion wie Helium, in diesem Zusammenhang auch Asche genannt, sowie Kohlenwasserstoffe, Ammoniak, Wasserstoff, Stickstoff. Des Weiteren ist die Zusammensetzung des Abgases von den in der Brennkammerwandung des Torus eingesetzten zur Abschirmung dienenden Materialen und von weiteren Hilfsstoffen abhängig.

Die schweren Atome der Elemente Eisen, Nickel, Chrom o. ä., die durch Plasmateilchen aus der Wand des Torus herausgeschlagen werden, sind jedoch anders als der leichte Wasserstoff, auch bei den hohen Fusionstemperaturen nicht vollständig ionisiert. Je höher die Ladungszahl dieser Verunreinigungen desto mehr Elektronen sind noch an die Atomrümpfe gebunden.

Umso stärker entziehen sie dem Plasma Energie und strahlen sie als Ultraviolett- oder Röntgenstrahlung wieder ab. Auf diese Weise kühlen sie das Plasma ab, verdünnen es und verringern so die Fusionsausbeute. Zum vollständigen Erliegen der Fusionsreaktion kommt es bereits bei einem relativ geringen Anteil von Verunreinigungen zwischen 1 bis 10 % der eingesetzten Gesamtmasse an Brennstoff, dementsprechend muss auch das gesamte in der Brennkammer befindliche Gas kontinuierlich einer Aufbereitung unterzogen werden.

Um das Plasma vor Verunreinigungen aus der Wand zu schützen, lenkt ein spezielles Magnetfeld die Plasmarandschicht auf besonders ausgerüstete Stellen der Brennkammer, die als die Divertoren bezeichnet werden.

Das bei der Neutralisation des Plasmas an den Divertoren entstehende Neutralgas, das gegenüber dem Plasmähauptstrom einen höheren Druck aufweist, wird durch die sogenannten Divertorpumpen in der Regel ausgebildet als Kryogene-Vakuumpumpen und zusätzlichen nachgeschalteten Turbomolekularpumpen aus der Brennkammer abgepumpt bzw. abgezogen.

Dem kryogenen Vakuumsystem muss dementsprechend eine Tieftemperatur-Kälteanlage (Kryo-Anlage) bereitgestellt werden, um die Divertorpumpen ausreichend mit Betriebsmittel wie zum Beispiel flüssiges Helium zu versorgen. Ein solches kryogenes Vakuumsystem muss aufgrund des Funktionsprinzips von Zeit zu Zeit regeneriert werden, dementsprechend kann es nicht kontinuierlich betrieben werden.

Heliumkälteanlagen haben zudem den Nachteil eines enormen Energiebedarfs und erfordern hohe Investitionen beim Bau.

Die anschließende Rückführung des in der Tritium-Wiederaufbereitungsanlage (Tritium-Plant (TP)), gereinigten bzw. wiederaufbereiteten Abgases erfolgt über ein oder mehrere Brennstoff(zwischen)speichersysteme bzw. eine Brennstoffspeicheranlage, wobei hier neben der Zwischeneinlagerung auch die Gasmischungs- und Injektionssysteme beinhaltet sind. Diese komplexe Anlage wird allgemein unter dem Begriff Brennstoffspeicheranlage oder Fuelling & Storage System (FS) subsumiert.

Ein bisher in Betracht gezogenes Wiederaufbereitungsverfahren in einer Tritiumwiederaufbereitungsanlage (TP), wurden bereits in dem Bericht **/1/** "Los Alamos 6855-P" von J.L. Anderson und R.H. Sherrnan, Juni 1977, mit dem Titel "Tritium System Test Assembly" beschrieben. Dieses Verfahren ist außerordentlich komplex und erfordert eine derartige Temperaturerhöhung des Tritiums enthaltenden Abgasvolumenstroms, sodass das Tritium in die Metalle der Abgas führende Anlage diffundiert und diese aufgrund der Permeabilität unbeabsichtigt durchdringt.

Aus der EP 0 293 730 B1 ist eine Verfahren bekannt, welches das Abgas zuerst in einer Wasser adsorbierenden Stufe trocknet und anschließend in einer Stufe die Schwefelverbindungen selektive adsorbiert. Schließlich wird das aus dieser Stufe austretende Abgas in einer Adsorptions- und Trennstufe für Wasserstoff auf Zeolitbasis aufbereitet.

Die DE 36 06 317 A1 schlägt vor, dass das Tritium-und/oder Deuterium haltige Abgas durch Mittel zum Cracking sowohl des Ammoniaks als auch der Kohlenwasserstoffe aufbereitet wird. Hier werden anschließend die freigesetzten Wasserstoffisotope durch eine Membran hindurchgeführt und vom Restabgasstrom abgetrennt. Das übrige dekontaminierte Abgas wird in die Umgebungsluft abgeleitet.

Dem Stand der Technik ist gemein, dass die jeweiligen Lösungen der Reinigung des Abgases grundsätzlich immer in einer Tritiumwiederaufbereitungsanlage (Tritium-Plant (TP)) prozessiert werden, wobei diskontinuierlich arbeitende Kryogene-Pumpen als Vorvakuum- und Hochvakuumpumpen zu Einsatz kommen.

Ein Alternative zu dem vorgenannten Stand der Technik wurde erstmals als das DIR-Konzept (DIRECT INTERNAL RECYCLING) bereits in der Veröffentlichung **/2/** "Ergebnisse aus Forschung und Entwicklung - Jahresbericht 2012" (KIT, ITEP, März 2013) und der Veröffentlichung, **/4/** "The DIRECT INTERNAL RECYCLING concept to simplyfy the fuel cycle of a fusion power plant' (C. Day, T. Giegerich, Fus. Eng. Des. 2012, in press) beschrieben.

Eine hierzu notwendige Metallfolienpumpe zur Abtrennung von Wasserstoff-Isotopologen wurde bereits in der Veröffentlichung mit dem Titel **/3/** "Development of divertor pumping System with supermeable membrane" offenbart. Hier wird auch die Atomisierung von Wasserstofftopologen offenbart, welche den Einsatz von glühenden Tantalstäben bzw. Tantaldrähten vorsieht. Die typischen Betriebstemperaturen liegen hierfür bei ca. 800 °C.

Eine noch höhere Metallfolientemperatur, wobei die Metallfolie aus Niob bereitgestellt wurde, hatte jedoch auf die Superpermeabilität der Metallfolie keine Auswirkungen. Somit ist der Betrieb der bereits offenbarten Ausführung einer Metallfolienpumpe extrem Energieintensiv.

Ein weiteres Beispiel von Metallfolienpumpe wurde bereits in der Veröffentlichung von Magaud et al.: "SEPARATION OF THE D/T MIXTURE FROM HELIUM IN FUSION REACTORS USING SUPERPERMEABLE MEMBRANES", Annual Report of the Association EURATOM/CEA 2002, Nr. UT-TBM/FC-SP 2002, Seiten 397-399, offenbart.

Eine alternative Möglichkeit ein Niedertemperaturplasma zu erzeugen, wurde in der Veröffentlichung von **/6/** Merle et al. "Hochabscheidung mit einem Mikrowellenplasma", 02.04.2013 vorgestellt. Die in der Veröffentlichung offenbarte Duo-Plasmalinie besteht hauptsächlich aus einem dielektrischen Rohr, welches vakuumdicht durch eine Niederdruckapparatur geführt wird. Als Material werden je nach Anwendung Quarze, verschiedene Gläser und diverse Keramiken gewählt. Innerhalb des Rohres wird Kühlluft bei Atmosphärendruck geleitet, und um das Rohr befindet sich die Niederdruckatmosphäre. Von beiden Seiten wird in das Rohr Mikrowelle durch eine Koaxialleitung eingespeist. Der Atmosphärendruck im Inneren des Rohres verhindert eine Zündung des Plasmas. Im inneren Bereich des Niederdruckgefäßes wird der äußere Leiter der Koaxialleitung unterbrochen; der Innenleiter wird weitergeführt. Durch das Fehlen des äußeren Leiters wird nun die Mikrowelle in den Niederdruck eingestrahlt. Dort kann sich, wie beim üblichen.Einkoppelfenster, ein Plasma ausbilden, welches sich bei der Duo-Plasmalinie schlauchförmig und radialsymmetrisch um das dielektrische Rohr legt. Auch hier verhindert das Plasma durch seine Leitfähigkeit ein weiteres Eindringen der Mikrowelle in die Kammer und bleibt um das Rohr lokalisiert.

Um ein Hochvakuum herzustellen, kann neben den bereits erwähnten Kryogenen-Vakuumpumpen oder Turbomolekularpumpen auch die Verwendung der Kombination aus einer Flüssigmetalldiffusionspumpe (FMDP) und einer Flüssigmetallringpumpe (FMRP) und einer Metallfolienpumpe (MFP) in Betracht gezogen werden.

Diese Kombination wurde bereits in der Veröffentlichung **/4/** "Conceptuation of a continously working vacuum pump train for fusion power plants" (T. Giegerich, C. Day, Fus. Eng. Des. 2012, in press) vorveröffentlicht. Die genaue Prozessführung sowie die Ausgestaltung der MFP werden jedoch nicht offenbart.

Davon ausgehend liegt die **Aufgabe der Erfindung** darin, besonders ökonomisches und schnelles Verfahren und Vorrichtung zur kontinuierlichen Abgasreinigung eines Fusionsreaktors bereit zu stellen.

Diese Aufgabe wird erfindungsgemäß durch ein Verfahren nach dem ersten Anspruch sowie einer Vorrichtung nach dem siebten Anspruch gelöst. Bevorzugte Ausführungsformen sind in den abhängigen Ansprüchen beschrieben.

Zur Lösung der Aufgabe werden Maßnahmen zur Einstellung einer im technischen Maßstab zu realisierende gleich bleibend ablaufende bzw. kontinuierliche Abtrennung von Wasserstoff-Isotopologen aus dem Abgas eines Fusionsreaktors und deren Rückführung über eine Brennstoffspeicheranlage in die Brennkammer eines Fusionsreaktors vorgeschlagen. Damit wird eine konstante Brennstoffversorgung und hohe Brennstoffgüte angestrebt.

Als eine Maßnahme zur gleichbleibend ablaufende Wiederaufbereitung eines Abgases, welches als gasförmiges und/oder atomares und/oder chemisch gebundene Gemisch von Deuterium und Tritium und Verunreinigung, welches als Abfallprodukt eines Fusionsreaktors vorhanden ist, wird vorgeschlagen, dies durch das kontinuierliches Abziehen eines Abgasvolumenstroms aus der Brennkammer und anschließendem Auftrennen der Wasserstoff-Isotopologe und Restgas durchzuführen, wobei die Wasserstoff-Isotopologe gasförmig über die Brennstoffspeicheranlage (Fuelling and Storing System) in die Brennkammer rückgeführt werden und das Restgas der Tritium-Wiederaufbereitungsanlage (Tritium-Plan (TP)) zugeführt wird.

Der Restgasanteil, der an Helium und anderen Verunreinigungen angereichert ist, muss nach wie vor in der Tritium-Wiederaufbereitungsanlage prozessiert werden. Dieser Restgasanteil soll möglichst klein sein, da dadurch auch die erforderliche Größe der Tritium-Wiederaufbereitungsanlage gering ausfällt.

Der Restgasanteil nach der Auftrennung durch mindestens eine Metallfolienpumpe beträgt zwischen ca. 5 % bis ca. 50 % des gesamten Abgasvolumenstroms, bevorzugt jedoch zwischen ca. 10 % und ca. 20 %, abhängig vom Kraftstoffverbrauch (Burnup-Fraction) des Fusionsreaktors.

Ein Aspekt der vorliegenden Erfindung besteht somit darin, zu verhindern, dass der gesamte Abgasstrom in der Tritium-Wiederaufbereitungsanlage (TP) prozessiert werden muss, was zu einer sehr großen Tritium-Wiederaufbereitungsanlage (TP) mit entsprechend großem Tritium-Inventar führt. Zusätzlich wird eine dementsprechend dimensionierte Kryo-Kälteanlage und das damit verbundene (Helium) Inventar benötigt. Dementsprechend wird ein Teil der entstandenen Abgase aus der Brennkammer kontinuierlich und unabhängig vom Betriebszustand des Fusionsreaktors abgezogen bzw. abgepumpt.

Vorzugsweise kommt in einem ersten Schritt, eine Metallfolienpumpe (MFP) zum Einsatz. Die MFP ist als eigene Pumpe sowie Trennmodul in Flussrichtung des Abgases noch vor der ersten Dampfsperre und vor der Primärpumpe installiert.

Die MFP ist sehr nahe, vorzugsweise ca. 0,5 - 5 Meter, an der Brennkammer im Bereich der Divertoren positioniert, und trennt zwischen 5 und 95% der im Abgas enthaltenen Wasserstoff-Isotopologe vom Abgas.

Das Funktionsprinzip der MFP basiert auf Superpermeabilität, d.h. die Wasserstoff-Isotopologe können durch Metalle hindurch diffundieren, aber hierzu müssen die im Abgas enthaltenen Wasserstoff-Isotopologe zuerst atomisiert werden. Dies geschieht, wie im Stand der Technik bereits beschrieben, durch das Einbringen von Energie, welche die als Molekül vorliegenden Wasserstoffverbindungen atomisiert. Bekannt sind elektrisch beheizte Strukturen wie Stäbe, Gitter oder Filament, welche das Abgas sowie die Metallfolie erhitzen.

Bevorzugt wird hier aber, abweichend vom Stand der Technik, ein zum Zweck der Ionisation und der Atomisierung des Abgases, ein Mikrowellenplasma bzw. eine Mikrowellen-Plasmafackel eingesetzt. Bevorzugt werden Mikrowellen mit einer Frequenz von 2,45 GHz, es können aber auch Frequenzen bis zu 300 GHz eingesetzt werden. Eine Ausführung sieht vor mehrere Frequenzen zur gleichen Zeit über denselben oder auch mehrere Leiter einzukoppeln.

Die Verwendung eines Mikrowellenplasmas bietet die Möglichkeit, das Magnetron in beliebiger Entfernung von der Metallfolienpumpe. (MFP) zu installieren und die Mikrowellen über elektrisch leitende Stäbe oder Hohlstäbe, vorzugsweise über Wolframstäbe (Wolframleitungen) zu der bzw. in die MFP zu leiten. Dementsprechend wird die empfindliche Elektronik des Magnetron zusätzlich geschützt, da diese außerhalb des Magnetfelds und des Strahlungsbereichs der Brennkammer positioniert ist.

Zur weiteren Effizienzsteigerung der Metallfolienpumpe wird über ein elektrisch leitendes koaxiales Gitter oder Netz oder Gewebe die Geschwindigkeit der ionisierten Wasserstoffatome gezielt beeinflusst. Zwischen dem Gitter und dem Gehäuse wird durch Anlegen einer Spannung vorzugsweisezwischen 25 Volt und 500 Volt ein zusätzliches elektrisches Feld aufgebaut welches durch geeignete Auswahl der Spannung die ionisierten Wasserstoffatome in Richtung der Metallfolie beschleunigt.

Die energieeffizientere Erzeugung von atomarem Wasserstoff bei niedrigeren Temperaturen vorzugsweise zwischen 100 °C bis 500 °C ist somit energetisch dementsprechend auch ökonomisch vorteilhafter.

Der atomisierte (ionisiert) Wasserstoff kann in diesem Zustand durch die Metallfolie, vorzugsweise aus einem Metall der V.-Hauptgruppe wie Vanadium, Niob, Tantal mit einer Dicke von ca. 0,01 bis 0,1 mm hindurch diffundieren. Die Metallfolie kann auch als Laminat unterschiedlicher Metalle oder Legierungen der V.-Hauptgruppe in Verbindung mit Wolfram oder Platin bestehen. Nach dem der Diffusionprozesses abgeschlossen wurde, rekombinieren die Wasserstoffatome zu den Wasserstoff-Isotopologen.

Hierdurch wird ein atomarer partieller Differenzdruck aufgebaut, d.h. es kommt in der Wirkung zu einem Saugeffekt. Diese Wirkung ist aber nur für atomaren Wasserstoff ausreichend ausgeprägt, worauf die Trennfunktion der Metallfolienpumpe (MFP) grundlegend basiert. Der Betriebsbereich der MFP liegt bei einem Ansaugdruck zwischen 10⁻⁹ Pa und 100 Pa, besonders bevorzugt zwischen 10⁻⁸ Pa und 10 Pa (alle angegebenen Drücke sind als absolute Drücke zu verstehen bzw.'angegeben).

Die Wasserstoff-Isotopologe werden gasförmig der Brennstoffspeicheranlage (Fuelling and Storing System (FS)) zugeführt, wobei diese zuerst mittels einer Dampfsperre (Gaskühler, Baffle, Kühlfalle), vorzugsweise mehrstufig ausgeführt und nahe am Torus und nach der MFP positioniert. Hier werden die Wasserstoff-Isotopologe auf eine Temperatur zwischen -200 °C und 30 °C konditioniert. Diese Dampfsperre verhindert, dass Flüssigmetalldämpfe (Quecksilberdämpfe) aus der nachfolgenden Primärpumpe in die Brennkammer (Torus) zurückgelangen können.

Der ausschließliche Einsatz von tiefkalten Dampfsperren (Gaskühlern) würde den Einlass der Primärpumpe durch das rückströmende und ausfrierende Betriebsmittel bzw. Flüssigmetall nach einer absehbaren Betriebszeit verschließen.

Die Primärpumpe, welche als Flüssigmetalldiffusionspumpe (FMDP) ausgebildet ist, umfasst keinerlei bewegte Teile und ist sind vollständig Tritium kompatibel sowie resistent gegen Magnetfelder und Staub, praktisch wartungsfrei.

Die Primärpumpe(n) benötigen ein Tritium beständiges Betriebsmittel. Als Betriebsmittel wird im Rahmen.der Erfindung ein Flüssigmetall eingesetzt, wobei unter Flüssigmetall im Folgenden ein Metall oder eine Legierung oder eine organische Verbindung oder anorganische Verbindung verstanden wird, welche bei Temperaturen unterhalb von 200°C flüssig ist und bei Temperaturen über 200 °C bis 500 °C dampfförmig vorliegt. Beispielsweise trifft dies für Quecksilber zu.

Durch einen Düsenstock im Zentrum der Primärpumpe tritt das verdampfte Betriebsmittel aus, um an der Wand wieder zu kondensiert und in den Sumpf (Boiler) der Primärpumpe zurückzulaufen. Die Pumpwirkung basiert auf einem Impulsaustausch zwischen dem überschallschnellen Gasjet zwischen Düsenstock und Wand im Inneren der Pumpe.

Die Primärpumpen müssen mitunter einen sehr weiten Druckbereich abdecken. Der Ansaugdruck liegt in der sogenannten Dwell-Phase (d.h. in der Zeit zwischen zwei Plasmapulsen in der Brennkammer) bei <10⁻⁸ mbar, während der sogenannten burn-Phase (die Zeit in der die Fusionsreaktion in der Brennkammer stattfindet) liegt dieser bei ca. 100 Pa.

Die Primärpumpe verdichten die Wasserstoff-Isotopologe auf einen Druck unterhalb 1000 Pa, wobei der Ansaugdruck an der Primärpumpe zwischen 10⁻⁸ Pa und 1000 Pa schwankt.

Zusätzliche kann in die Primärpumpe eine Ejektorstufe am Auslass integriert sein, die wie eine Gasstrahlpumpe mit dem verdampften Betriebsmittel (Flüssigmetall), vorzugsweise Quecksilberdampf als Treibmittel arbeitet. Diese spezielle Ausführung ermöglichst es die Vorvakuumbeständigkeit der Diffusionspumpe auf über 100 Pa zu erhöhen. Dies ist notwendig, um den Übergabedruck zur Sekundärpumpe zu erreichen.

Um zu verhindern, dass Betriebsmittel in die Brennkammer entgegen der eigentlichen Pumprichtung (Flussrichtung des Abgases) zurückströmt, müssen mehrere Dampfsperren (Baffles, Gaskühler) vor oder in den Einlasstrakt der Flüssigmetalldiffusionspumpe installiert sein. Vorzugsweise wird ein lineares Design mit integrierten Dampfsperren (Baffles, Gaskühler) vorgeschlagen. In dieser Ausführung als Linear-Metall-Diffusions-Pumpe (LMDP) werden die Dampfsperre in die Flüssigmetalldiffusionspumpe integriert, d.h. derart miteinander verbunden das die Funktionen der Flüssigmetalldiffusionspumpe und der Dampfsperre in einem Gehäuse ausgeführt werden.

Die Flüssigmetalldiffusionspumpe kann als Hochvakuumpumpe nicht gegen Atmosphärendruck verdichten und benötigen daher eine Vorpumpe, hier als Sekundärpumpe bezeichnet, welche die verdichten Wasserstoff-Isotopologe auf einen Druck von 1000 Pa bis 2*10⁵ Pa weiter verdichtet. Der Ansaugdruck (p3) an der Sekundärpumpe welche als Metallflüssigmetallringpumpe (MFRP) ausgebildet ist beträgt hier weniger als 1000 Pa. Die Sekundärpumpen verdichten die Wasserstoff-Isotopologen von weniger als 1000 Pa auf mindestens 2*10⁵ Pa.

Vorzugsweise werden zweistufige Metallflüssigkeitsringpumpen, mit Gasstrahlpumpe am Einlass eingesetzt.

Auch die Sekundärpumpen müssen vollständig gegenüber Tritium beständig sein (d.h. keine Verwendung von Fetten oder Ölen als Schmiermittel), und sie müssen nach außen hin hermetisch dicht sein, was eine Verwendung von Labyrinth- oder Polymerdichtungen ausschließt. Die Sekundärpumpen haben ein Saugvermögen bezogen auf die Wasserstoff-Isotopologen von mindestens 1000 m³/h. Das Betriebsmittel der Sekundärpumpe ist ebenfalls ein Tritium beständiges Flüssigmetall, vorzugsweise Quecksilber.

Die Quecksilberabscheidung im Abgas nach Durchlaufen der der Sekundärpumpe (Flüssigmetallringpumpe) werden erfindungsgemäß durch mindestens eine mehrstufige Dampfsperre realisiert, der die Wasserstoff-Isotopologe aus der Flüssigmetallringpumpe strömend stufenweise herunterkühlt und so Quecksilber zunächst auskondensiert und später ausfriert. Anschließend muss das Gas (Abgas / Wasserstoff-Isotopologe) wieder erwärmt werden, um ein Vereisen der Rohrleitungen nach der Pumpe zu verhindern.

Die Wasserstoff-Isotopologe werden nun wiederholt mittels einer mehrstufigen Dampfsperre (Kühlfalle), auf eine Temperatur zwischen - 200 °C und 30 °C konditioniert und anschließend gasförmig der Brennstoffspeicheranlage zugeführt.

Das Restgas (restliche Abgas) durchläuft die identischen Verfahrensschritte wie die Wasserstoff-Isotopologe mit dem Unterschied, dass die Wasserstoff-Isotopologe in die Brennstoffspeicheranlage (Fuelling and Storing System (FS)) und das Restgas zur weiteren Aufbereitung in der Tritiumwiederaufbereitungsanlage (Tritium-Plant (TP)) zugeführt werden.

Das Restgas wird zuerst mittels einer Dampfsperre (Kühlfalle), vorzugsweise mehrstufige ausgeführt und nahe am Torus positioniert, auf eine Temperatur zwischen -200 °C und 30 °C konditioniert. Die Primärpumpe verdichten das Restgas auf einen Druck unterhalb 1000 Pa, wobei der Ansaugdruck (p2) an der Primärpumpe (P01) zwischen 10⁻⁸ Pa und 1000 Pa schwankt.

Die Metalldiffusionspumpe kann als Hochvakuumpumpe nicht gegen Atmosphärendruck verdichten und benötigen daher eine Vorpumpe hier Sekundärpumpe als Flüssigmetallringpumpe (FMRP) ausgeführt, welche die verdichten Wasserstoff-Isotopologe auf einen Druck von 1000 Pa bis 2*10⁵ Pa weiter verdichtet. Der Ansaugdruck (p3) an der Sekundärpumpe, welche als Flüssigmetallringpumpe ausgebildet ist, beträgt hier weniger als 1000 Pa, vorzugsweise zwischen 200 und 900 Pa.

Das Restgas wird nun wiederholt mittels einer mehrstufigen Dampfsperre (Kühlfalle), auf eine Temperatur zwischen -200°C und 30°C konditioniert und anschließend gasförmig der Tritiumwiederaufbereitungsanlage (Tritium-Plan (TP)) zugeführt.

Um zu verhindern, dass Betriebsmittel in die Brennkammer entgegen der eigentlichen Pumprichtung (Flussrichtung des Abgases) zurück strömt, müssen eine oder mehrere Dampfsperren (Baffles) vor oder in den Einlasstrakt der Diffusionspumpe installiert sein. Vorzugsweise wird ein lineares Design mit integrierten Dampfsperren (Baffles) vorgeschlagen (Linear-Metall-DiffusionPumpe, LMDP).

Wie bereits ausgeführt, kann die LMPD als Hochvakuumpumpen nicht gegen Atmosphärendruck verdichten und benötigt daher eine Vorpumpe (Sekundärpumpe), welche die verdichteten Wasserstoff-Isotopologe auf einen Druck von 1000 Pa bis 2*10⁵ Pa weiter verdichtet. Der Ansaugdruck (p3) an der Sekundärpumpe welche als Flüssigmetallringpumpe ausgebildet ist beträgt hier weniger als 1000 Pa.

Anschließend muss das Gas wieder erwärmt werden, um ein Vereisen der Rohrleitungen und Komponenten nach der Pumpe zu verhindern. Zum Betrieb der Dampfsperren (Kühlfalle, Gaskühler) wird verdichtetes Gas bei verschiedenen Temperaturniveaus sowie Kühlwasser verwendet, welches von mindestens einer Pumpenversorgungsanlage (Pump-Supply-Plant (PSP)) zur Verfügung gestellt wird.

Die Erfindung wird im Folgenden anhand von vorteilhaften Ausführungsformen mit den folgenden Figuren näher erläutert. Es zeigen:
**Fig. 1** eine schematische Darstellung eines Brennstoffkreislaufs eines Fusionsreaktors sowie der Abgasaufbereitung,
**Fig. 2** eine schematische Darstellung der Primärpumpe,
**Fig. 3** eine schematische Darstellung der Sekundärpumpe,
**Fig. 4** eine schematische Darstellung einer Pumpenversorgungsanlage sowie
**Fig. 5** eine schematische Darstellung einer Metallfolienpumpe.

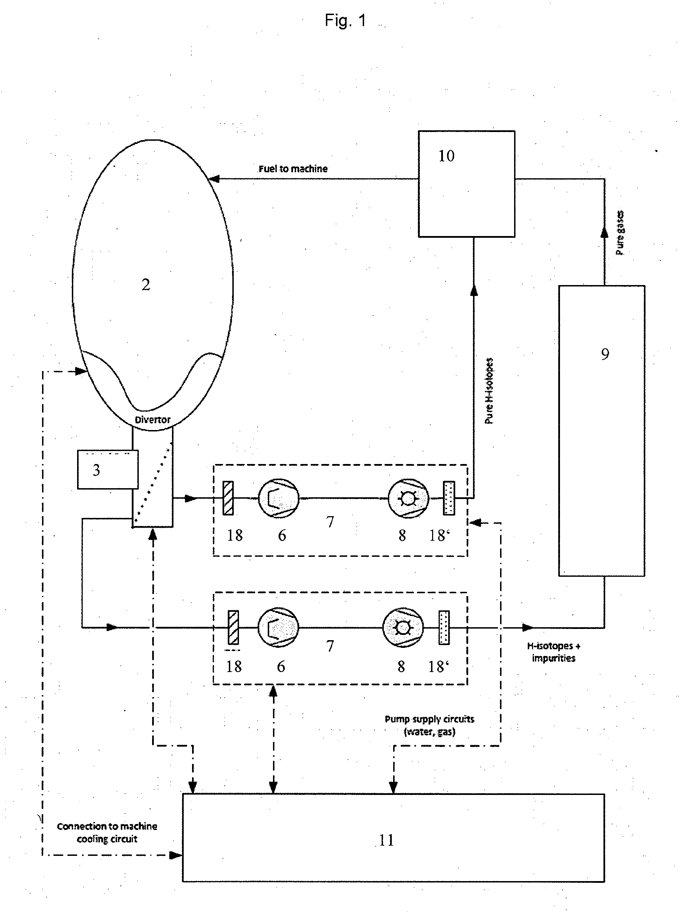

**Fig. 1** zeigt eine schematische Darstellung des Brennstoffkreislaufs eines Fusionsreaktors sowie der Abgasaufbereitung, wobei das Abgas der Fusionsreaktion, die in der Brennkammer (Torus) 2 stattfindet, über eine Metallfolienpumpe (MFP) 3 abgezogen und durch die Metallfolienpumpe 3 in einen Volumenstrom aus reinen Wasserstoff-Isotopologen sowie Restgas aufgetrennt werden. Die beiden Volumenströme werden nun jeweils getrennt durch eine Primärpumpe 6 gepumpt, um das für die Metallfolienpumpe 3 notwendige Vakuum aufrecht zu erhalten. Die Primärpumpen 6 sind über Vorvakuumleitungen an die zugehörigen Sekundärpumpen 8 angeschlossen. Die abgepumpten Gase werden zum einen betreffend der WasserstoffIsotopologe direkt in der Brennstoffspeicheranlage (Fuelling and Storage System (FS)) 10 zugeführt zum anderen wird das Restgas über die Tritiumwiederaufbereitungsanlage (Tritium-Plan (TP)) 9, in der das Restgas aufbereitet wird, wieder der Brennstoffspeicheranlage 10 zugeführt.

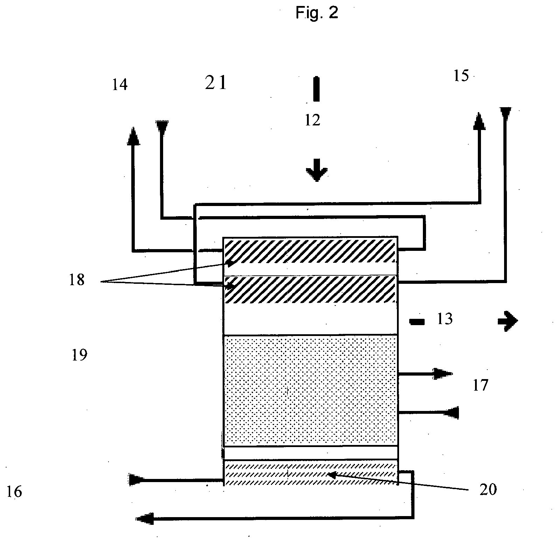

**Fig. 2** zeigt eine schematische Darstellung der Primärpumpe als Metalldiffusionspumpe 21 ausgeführt, wobei das Gas (Abgas bzw. Wasserstoff-Isotopologe) welches durch die Metalldiffusionspumpe 21 gepumpt wird, zuerst über zwei sequentiell angeordneten Dampfsperren 18 geführt wird. Das Gas wird mittels zwei unterschiedlich komprimiertem sowie unterschiedlich kalten Gaskreisläufen 14, 15 konditioniert. In der Metalldiffusionspumpe wird das Flüssigmetall in einem Flüssigmetallverdampfer 20 über einen Heizkreislauf aus komprimiertem Gas 16 derart konditioniert, dass es verdampft und im inneren der Metalldiffusionspumpe 21 durch die Düsenstöcke (nicht dargestellt) verteilt und letztendlich an der durch einen Kühlwasserstrom 17 gekühlten Wand 19 kondensiert. Das Gas verlässt die Pumpe in Richtung der Vorvakuumleitung 7.

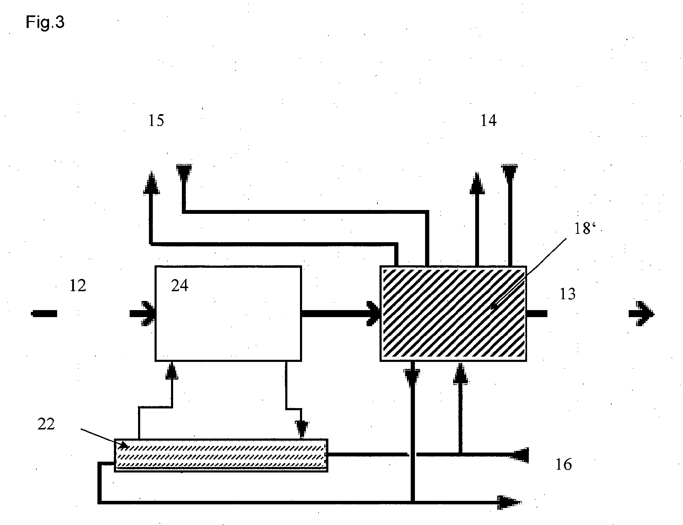

**Fig. 3** zeigt eine schematische Übersicht über Sekundärpumpe 8 und deren Stoffströme, wobei das Gas (Restgas oder Wasserstoff-Isotopologe) aus der Vorvakuumleitung 12 gelangt in die Metallflüssigkeitsringpumpe (MLRP) 24, wo es komprimiert wird. Nach der MLRP 24 gelangt das Gas in eine Dampfsperre 18', wo das Gas durch Kühlen durch verschiedene Kreisläufe 14, 15, 16 stufenweise abgekühlt wird. Somit können alle Flüssigmetalldämpfe auskondensieren. Der von Flüssigmetalldämpfen befreite Gasstrom verlässt die Pumpe in Richtung der Tritium-Wiederaufbereitungsanlage 9 bzw. in Richtung des Brennstoffspeichersystems (FS) 10. Das von der Sekundärpumpe 8 ausgestoßene Betriebsmittel 22 wird über einen Flüssigmetallkühler 21, welcher mittels Kühlwasser 15 gekühlt ist, rückgeführt.

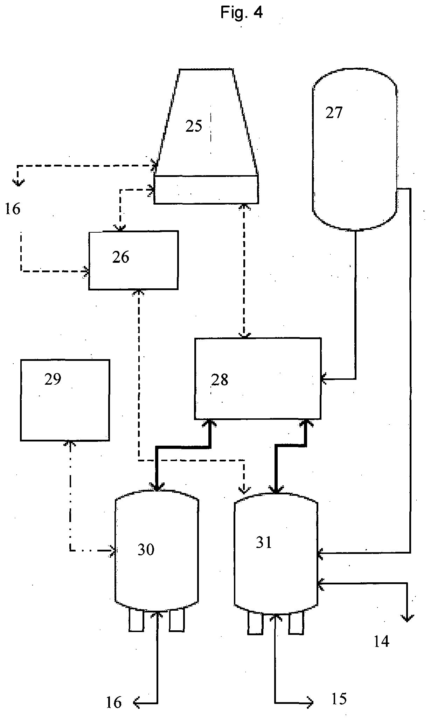

**Fig. 4** zeigt eine schematische Darstellung der Pumpenversorgungsanlage 11 (Pump Supply Plant (PSP)). Die Pumpenversorgungsanlage 11 versorgt ausschließlich die Metallfolienpumpe (MFP) 3 sowie die Primärpumpen 6 und Sekundärpumpen 8 mit den für den Betrieb notwendigen Heiz- und Kühlmitteln, hier komprimierte Gase wie Stickstoff, Argon oder andere Edelgase. Hierzu zählen zwei Kühlkreisläufe 14, 15 und ein Heizkreislauf 16, die die Wärme mittels komprimiertem Gas übertragen. Dieser Gasstrom wird von einem gemeinsamen Kreislaufgebläse 28 getrieben, welches auch die beim Durchströmen des Systems auftretenden Druckverluste ausgleicht.

Das Erwärmen und Kühlen der Gasströme erfolgt in einer sogenannten 'hot box' 30 bzw. sogenannten 'cold box' 31, welche isolierte Behälter darstellen in denen alle erforderlichen Wärmeüberträger und Ventile eingebaut sind. Die erforderliche Wärme zum Heizen wird durch den Kühlkreislauf des Fusionsreaktors 28 bereitgestellt.

Die Kühlung erfolgt durch Verdampfen von Flüssigstickstoff oder durch den Einsatz einer Kryoanlage (Kälteanlage) 26. Die Abwärme des Kreislaufgebläses bzw. der Kältemaschinen 25 der Kühlwasserkreisläufe 15 erfolgt durch einen Kühlturm 24.

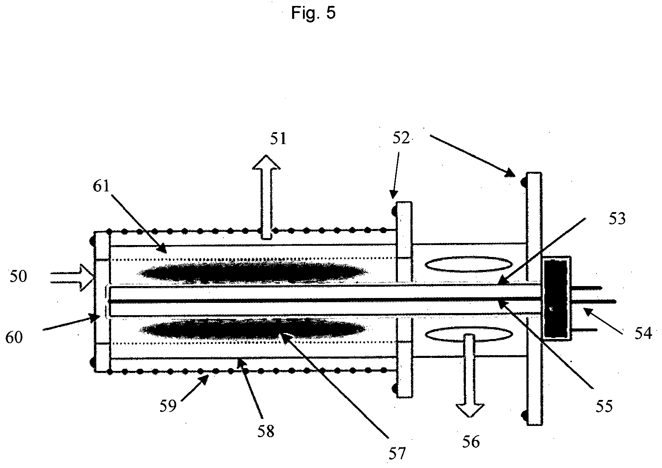

**Fig. 5** zeigt eine schematische Darstellung einer Metallfolienpumpe. Die erfindungsgemäße Metallfolienpumpe besteht aus einer Metallfolie 58 oder Metallfolienlaminat, die von außen durch eine Folienheizung (Heizstäbe oder Heizdrähte) 59 auf eine Temperatur zwischen 300 und 800°C, bevorzugt 400°C, aufgeheizt wird. Das Abgas aus der Brennkammer (Torus) 2. durchströmt die Vorrichtung, wobei das einströmende Abgas durch ein Mikrowellenplasma, welches sich im Umfeld eines koaxial zur Metallfolie positionierten Quarzrohres 60 befindet, erzeugt wird. Über das innere 53 und das äußere koaxiale Rohr 54 wird die Mikrowelle über die Versorgungsanschlüsse 55 von außen eingekoppelt. Alle Wasserstoff-Isotopologe die nicht durch die Metallfolie 58 treten, werden, zusammen mit dem Restgas 56, am Ende der Vorrichtung abgeschleust. Die Wasserstoff-Isotopologe sowie das Restgas treten jeweils getrennt aus der Pumpe aus und werden den Primärpumpen 6 zugeführt. Das Gitter (Netz oder Gewebe) im Inneren der Pumpe dient zum Einstellen der Energie der auf die Folie auftreffenden Atome. Durch Anlegen einer Spannung zwischen Gehäuse und dem Gitter 61 kann ein elektrisches Feld erzeugt werden und somit werden die ionisierten Wasserstoffatome beschleunigt oder abgebremst. Damit kann die Abscheiderate bzw. die Effizienz der Metallfolienpumpe in Abhängigkeit der Abgaszusammensetzung und der Metallfolientemperatur geregelt werden.

### Literatur:

/1/ " Tritium System Test Assembly", Los Alamos 6855-P" von J.L. Anderson und R.H. Sherrnan, Juni 1977
/2/ Development of divertor pumping system with superpermeable membrane Y Nakamuraa, N Ohyabua, H Suzukia, Y Nakaharaa, A Livshitsb, M Notkinb, V Alimovb, A Busnyukb a National Institute for Fusion Science, 322-6 Oroshi-cho, Toki 509-5292, Japan b Bonch-Bruyevich University, 61 Moika, 191186 St. Petersburg
/3/ "Ergebnisse aus Forschung und Entwicklung - Jahresbericht 2012" (KIT, ITEP, März 2013)
/4/ "The DIRECT INTERNAL RECYCLING concept to simplyfy the fuel cycle of a fusion power plant' (C. Day, T. Giegerich, Fus. Eng. Des. 2012, in press) beschrieben.
/5/ "Conceptuation of a continously working vacuum pump train for fusion power plants" (T. Giegerich, C. Day, Fus. Eng. Des. 2012, in press) vorveröffentlicht.
/6/ Hochrateabscheidung mit einem Mikrowellenplasma (S. Merli, A. Schulz, M. Walker, U. Stroth, T.); Vol. 25, Nr. 2, April 2013, ViP 33, WILEY-VCH Verlag GmbH & Co. KGaA, Weinheim

### Bezugszeichenliste:

- 1: Fusionsreaktor
- 2: Brennkammer (Torus)
- 3: Metallfolienpumpe, (Metal Foil Pump, MFP)
- 4: Wasserstoff-Isotopologe im Abgasvolumenstrom
- 5: Wasserstoff-Isotopologe+Verunreinigungen im Abgasvolumenstrom
- 6: Primärpumpe (Primary pump)
- 7: Vorvakuumleitung
- 8: Sekundärpumpe (Secondary pump)
- 9: Tritiumwiederaufbereitungsanlage (Tritium-Plant (TP))
- 10: Brennstoffspeicheranlage (Fuelling and Storage System (FS))
- 11: Pumpenversorgungsanlage (Pump-Supply-Plant (PSP))
- 12: Eintrittsgasvolumenstrom (Gas flow in)
- 13: Austrittsgasvolumenstrom (Gas flow out)
- 14: Komprimierter Gasstrom 1 (Compressed gas circuit 1)
- 15: Komprimierter Gasstrom 2 (Compressed gas circuit 2)
- 16: Komprimierter Gasstrom 3 (Compressed gas circuit 3)
- 17: Kühlwasserkreislauf (Cool water circuit)
- 18: Dampfsperre (Gaskühler, Baffle, Kühlfalle)
- 18': Dampfsperre (Gaskühler, Baffle, Kühlfalle)
- 19: Wandkühlung (Wall cooling)
- 20: Flüssigmetallverdampfer (Liquid metal boiler)
- 21: Flüssigmetalldiffusionspumpe (Diffusionspumpe, FMDP)
- 22: Flüssigmetallkühler (Liquid metal cooler)
- 23: Flüssigmetallfluss (Liquid metal flow)
- 24: Metallflüssigkeitsringpumpe (Metall Liquid ring pump, MLRP)
- 25: Kühlturm (Cooling tower)
- 26: Kältemaschine (Chiller)..

- 27: Flüssigstickstoffspeicher (Kryoanlage, Kälteanlage)
- 28: Kreislaufgebläse (Blower for pressurized gas)
- 29: Kühlsystem der Maschine (Machine cooling System)
- 30: Hot box
- 31: Cold box

- 50: Einlass für den Abgasvolumenstrom
- 51: Wasserstoff-Isotopologe
- 52: Dichtungen
- 53: Koaxiales Rohr
- 54: Versorgungsanschlüsse
- 55: Koaxiales Rohr zur Mikrowelleneinkopplung
- 56: Auslass für das Restgas
- 57: Plasma
- 58: Metallfolie
- 59: Folienheizung
- 60: Quarzrohr
- 61: Gitter
- 62: Verschlussdeckel
- 63: Verschlussdeckel

## Patentansprüche

1. Verfahren zur kontinuierlichen Wiederaufbereitung von Abgas eines Fusionsreaktors (1) mit einer Brennkammer (2), umfassend folgende Verfahrensschritte:
a) kontinuierliches Abziehen eines Abgasvolumenstroms aus der Brennkammer (2) eines Fusionsreaktors (1) mit mindestens einer Metallfolienpumpe (3),
b) Erzeugen eines Plasmas aus dem Abgasvolümenstrom nach Eintritt in die Metallfolienpumpe (3),
c) Auftrennen des Plasmas innerhalb der Metallfolienpumpe (3) in gasförmige Wasserstoff-Isotopologe und Restgas,
c1) Zuführen der gasförmigen Wasserstoff-Isotopologe aus der Metallfolienpumpe (3) in die Brennstoffspeicheranlage (10), mittels mindestens einer Primärpumpe (6) und mindestens einer Sekundärpumpe (8),
wobei die Temperatur der Wasserstoff-Isotopologe durch mindestens eine Dampfsperre (18) konditioniert wird,
c2) Zuführen des gasförmigen Restgases in eine Tritiumwiederaufbereitungsanlage (9) mittels der mindestens einen Primärpumpe (6) und der mindestens einen Sekundärpumpe (8),
wobei die Temperatur des Restgases durch die mindestens eine Dampfsperre (18, 18') konditioniert wird sowie
d) Rückführen der gasförmigen Wasserstoff-Isotopologe über die Brennstoffspeicheranlage (10) in die Brennkammer (2),
e) Erzeugung eines Plasmas aus dem Abgasvolumenstrom in der Metallfolienpumpe (3) durch Mikrowellen,
wobei die Mikrowellen außerhalb der Metallfolienpumpe (3) durch mindestens ein elektrisch leitendes Rohr und/oder mindestens einen elektrisch leitenden Stab in die Metallfolienpumpe (3) eingekoppelt werden.

2. Verfahren nach Anspruch 1,
**dadurch gekennzeichnet, dass** der Restgasanteil nach dem Einsatz des Mikrowellenplasmas und dem Auftrennen in der Metallfolienpumpe (3) durch die folgende zusätzliche Verfahrensschritte zwischen 5% und 50% des gesamten Abgasvolumenstroms, bevorzugt zwischen 10% und 20%, beträgt:
b) Verwendung einer Metallfolie (58) zur Gewährleistung den Diffusion des ionisierten/atomaren Wasserstoffes, und/oder
c) Anlegen einer Spannung zwischen einem Gitter (61) im Inneren der Metallfolienpumpe und dem Gehäuse der Metallfolienpumpe.

3. Verfahren nach Anspruch 1 bis 2,
**dadurch gekennzeichnet, dass**
die Wasserstoff-Isotopologe gasförmig nach Austritt aus der Metallfolienpumpe (3) der Brennstoffspeicheranlage (10) durch folgende Verfahrensschritte, zugeführt werden:
d) Konditionieren der Temperatur der Wasserstoff-Isotopologe in einem Temperaturbereich zwischen -200°C und +30°C durch die mindestens eine Dampfsperre (18),
e) Verdichten der Wasserstoff-Isotopologe auf einen Druck weniger als 1000 Pa,
wobei der Ansaugdruck an der Primärpumpe (6) zwischen 10⁻⁸ Pa und 1000 Pa schwankt,
f) Verdichten der Wasserstoff-Isotopologe auf 1000 Pa bis 2*10⁵ Pa,
wobei der Ansaugdruck an der Sekundärpumpe (8) weniger als 1000 Pa beträgt sowie
g) erneutes Konditionieren der Temperatur der verdichteten Wasserstoff-Isotopologe in einem Temperaturbereich zwischen -200 °C und +30 °C durch die mindestens eine Dampfsperre (18).

4. Verfahren nach Anspruch 1 bis 2,
**dadurch gekennzeichnet, dass**
das Restgas nach Austritt aus der Metallfolienpumpe (3) der Tritiumwiederaufbereitungsanlage (9) durch folgenden Verfahrensschritte zugeführt wird:
a) Konditionieren der Temperatur des Restgases in einem
Temperaturbereich zwischen -200 °C und 30 °C durch die mindestens eine Dampfsperre (18),
b) Verdichten des Restgases auf eine Druck weniger als 1000 Pa,
wobei der Ansaugdruck an der Primärpumpe (6) zwischen 10⁻⁸ Pa und 1000 Pa schwankt,
c) Verdichten des Restgassen auf mindestens 1000 Pa bis 2*10⁵ Pa,
wobei der Ansaugdruck an der Sekundärpumpe (8) weniger als 1000 Pa beträgt sowie
d) erneutes Konditionieren der Temperatur des verdichteten Restgases in einem Temperaturbereich zwischen -200 °C und 30 °C durch die mindestens eine Dampfsperre (18).

5. Vorrichtung zur Durchführung des Verfahrens nach einem der Ansprüche 1 bis 4
umfassend
eine Brennkammer (1) eines Fusionsreaktors (2), mindestens eine Metallfolienpumpe (3), mindestens vier Dampfsperren (18, 18'), mindestens zwei Primär-pumpen (6) mindestens zwei Sekundärpumpen (8),
**dadurch gekennzeichnet, dass**
die Brennkammer (1) des Fusionsreaktors (2) mit mindestens einer Metallfolienpumpe (3) derart verbunden ist,
dass ein Abgasstrom aus der Brennkammer (1) abziehbar ist und
zur Konditionierung der Temperatur des Restgases sowie der gasformigen Wasserstoff-Isotopologe nach Austritt aus der Metallfolienpumpe (3) jeweils mindestens eine Dampfsperren (18) vor der Primärpumpe (6) und mindestens eine Dampfsperre (18) nach der Sekundärpumpe (8) vorgesehen ist
und
die Metallfolienpumpe ein koaxial zur Metallfolie (58) positioniertes Quarzrohr (60) aufweist, in das über ein inneres (53) und ein äußeres (54) koaxiales Rohr, Mikrowellen über die Versorgungsanschlüsse (55) von außen eingekoppelt werden.

6. Vorrichtung nach Anspruch 5
**dadurch gekennzeichnet, dass**
die Dampfsperre (18) mindestens zwei Kühlstufen umfasst.

7. Vorrichtung nach Anspruch 5 und 6,
**dadurch gekennzeichnet, dass**
als Betriebsmittel für die Primärpumpe (6) und die Sekundärpumpe (8) Quecksilber vorgesehen ist.

8. Vorrichtung nach Anspruch 7,
**dadurch gekennzeichnet, dass**
zur Verdampfung des Betriebsmittels die mindestens eine Primärpumpe (6) sowie die mindestens eine Sekundärpumpe (8) mit einem komprimierten Edelgas und/oder N₂ und/oder H₂ und/oder einer Mischung aus,dergleichen
bei einem Druck zwischen 1 MPa bis 15 MPa insbesondere zwischen 2 MPa und 5 MPa, sowie einer Temperatur zwischen 80 °C und 430 °C beaufschlagt wird, vorzugsweise zwischen 130 °C und 230 °C.

9. Vorrichtung nach einem der Ansprüche 5 bis 8,
umfassend folgende Komponenten:
ein Gehäuse welches im inneren den Pumpenraum ausbildet wobei das Gehäuse an jeder Stirnseite mit einem Verschlussdeckel versehen ist wobei ein Verschlussdeckel einen Einlass (50) für den Abgasvolumenstrom und ein weiterer Verschlussdeckel auf der gegenüberliegenden Stirnseite einen Auslass (56) für das Restgas aufweist,
wobei das Gehäuse mindestens einen radialen Durchbruch als Auslass der Wasserstoff-Isötopologen aufweist und im Gehäuse
erstes koaxiales Rohr (53) um die Rotationsachse des Gehäuses liegt und mit den beiden Verschlussdeckeln derart lösbar verbunden ist, dass das erstes koaxiales Rohr (53) den Pumpenraum in zwei hermetisch getrennte Volumen teilt und ein zweites koaxiales Rohr (55) zur Mikrowelleneinkopplung in der Längsrichtung durch den Verschlussdeckel der Auslassseite im Gehäuse bis zum Verschlussdeckel der Einlassseite ersteckend angeordnet ist,
wobei das erste koaxiales Rohr (53) das zweite koaxial Rohr vollständig umhüllt und zwischen der Metallfolie (51) und dem ersten koaxialen Rohr (55) ein elektrisch leitendes Gitter das erste koaxiale wenigstens teilweise umhüllt
**dadurch gekennzeichnet, dass**
zwischen Gitter und Gehäuse ein Spannung zwischen, 25 Volt und 500 Volt, bevorzugt zwischen 50 V und 250 V anliegt.

## Claims

1. Method for the continuous re-processing of exhaust gas of a fusion reactor (1) having a combustion chamber (2), comprising the following method steps:
a) continuously withdrawing an exhaust gas volume flow from the combustion chamber (2) of a fusion reactor (1) with at least one metal foil pump (3),
b) generating a plasma from the exhaust gas volume flow after entering the metal foil pump (3),
c) separating the plasma inside the metal foil pump (3) into gaseous hydrogen isotopologues and residual gas,
c1) feeding the gaseous hydrogen isotopologues out of the metal foil pump (3) into the fuel storage facility (10) by means of at least one primary pump (6) and at least one secondary pump (8),
wherein the temperature of the hydrogen isotopologues is conditioned by at least one vapour barrier (18),
c2) feeding the gaseous residual gas into a tritium re-processing system (9) by means of the at least one primary pump (6) and the at least one secondary pump (8), wherein the temperature of the residual gas is conditioned by the at least one vapour barrier (18, 18'), and
d) feeding the gaseous hydrogen isotopologues via the fuel storage facility (10) into the combustion chamber (2),
e) generating a plasma from the exhaust gas volume flow in the metal foil pump (3) by microwaves, wherein the microwaves are coupled in from outside the metal foil pump (3) through at least one electrically conductive tube and/or at least one electrically conductive bar into the metal foil pump (3).

2. Method according to claim 1, **characterised in that** the residual gas portion, after the introduction of the microwave plasma and the separation in the metal film pump (3) by way of the following additional method steps, amounts to between 5% and 50% of the total exhaust gas volume flow, preferably between 10% and 20%:
b) use of a metal foil (58) to ensure the diffusion of the ionised/atomic hydrogen, and/or
c) imposition of a voltage between a lattice (61) in the interior of the metal foil pump and the housing of the metal foil pump.

3. Method according to claim 1 to 2, **characterised in that** the hydrogen isotopologues are fed to the fuel storage facility (10) in gaseous form after leaving the metal foil pump (3) by means of the following method steps:
d) conditioning of the temperature of the hydrogen isotopologues in a temperature range between -200 °C and +30 °C through the at least one vapour barrier (18),
e) compressing the hydrogen isotopologues to a pressure of less than 1000 Pa,
wherein the suction pressure at the primary pump (6) fluctuates between 10⁻⁸ Pa and 1000 Pa,
f) compressing the hydrogen isotopologues to 1000 Pa to 2*10⁵ Pa,
wherein the suction pressure at the secondary pump (8) is less than 1000 Pa, and
g) renewed conditioning of the temperature of the compressed hydrogen isotopologues in a temperature range between -200 °C and +30 °C through the at least one vapour barrier (18).

4. Method according to claim 1 to 2, **characterised in that** the residual gas, is conveyed to the tritium re-processing system (9) after leaving the metal foil pump (3) by means of the following method steps:
a) conditioning of the temperature of the compressed hydrogen isotopologues in a temperature range between -200 °C and +30 °C through the at least one vapour barrier (18),
b) compressing the residual gas to a pressure of less than 1000 Pa,
wherein the suction pressure at the primary pump (6) fluctuates between 10⁻⁸ Pa and 1000 Pa,
c) compressing the residual gas to at least 1000 Pa to 2*10⁵ Pa,
wherein the suction pressure at the secondary pump (8) is less than 1000 Pa, and
d) renewed conditioning of the temperature of the compressed hydrogen isotopologues in a temperature range between -200 °C and +30 °C through the at least one vapour barrier (18).

5. Device for carrying out the method according to any one of claims 1 to 4, comprising a combustion chamber (1) of a fusion reactor (2), at least one metal foil pump (3), at least four vapour barriers (18, 18'), at least two primary pumps (6), and at least two secondary pumps (8),
**characterised in that** the combustion chamber (1) of the fusion reactor (2) is connected to at least one metal foil pump (3) in such a way that an exhaust gas flow can be withdrawn from the combustion chamber (1), and
for the conditioning of the temperature of the residual gas and of the gaseous hydrogen isotopologues after leaving the metal foil pump (3), in each case at least one vapour barrier (18) is provided before the primary pump (6) and at least one vapour barrier (18) is provided after the secondary pump (8), and
the metal foil pump comprises a quartz tube (60) positioned coaxially to the metal foil (58), into which, via an inner (53) and an outer (54) coaxial tube, microwaves are coupled in from outside via the supply connections (55).

6. Device according to claim 5, **characterised in that** the vapour barrier (18) comprises at least two cooling stages.

7. Device according to claim 5 and 6, **characterised in that** mercury is provided as the operating means for the primary pump (6) and the secondary pump (8).

8. Device according to claim 7, **characterised in that**, for the damping of the operating means, the at least one primary pump (6) and the at least one secondary pump (8) are subjected to a compressed noble gas and/or N₂ and/or H₂ and/or a mixture thereof, at a pressure of between 1 MPa to 15 MPa, in particular between 2 MPa and 5 MPa, and a temperature of between 80 °C and 430 °C, preferably between 130 °C and 230 °C.

9. Device according to any one of claims 5 to 8, comprising the following components:
a housing, formed in the interior of the pump chamber, wherein the housing is provided on each face side with a closure cover, wherein the closure cover comprises an inlet (50) for the exhaust gas volume flow, and a further closure cover on the opposite face side comprises an outlet (56) for the residual gas, wherein the housing comprises at least one radial passage aperture as an outlet for the hydrogen isotopologues, and in the housing a first coaxial tube (53) lies about the rotation axis of the housing and is detachably connected to the two closure covers in such a way that the first coaxial tube (53) divides the pump chamber into two hermetically sealed volumes, and a second coaxial tube (55) for the coupling in of microwaves is arranged extending in the longitudinal direction through the closure cover of the outlet side in the housing as far as the closure cover of the inlet side, wherein the first coaxial tube (53) entirely surrounds the second coaxial tube, and between the metal foil (51) and the first coaxial tube (55) an electrically conductive lattice at least partially surrounds the first coaxial tube, **characterised in that** a voltage is imposed between the lattice and the housing, of between 25 Volt and 500 Volt, and preferably between 50 V and 250 V.

## Revendications

1. Procédé de retraitement en continu de gaz d'échappement d'un réacteur de fusion (1) comportant une chambre de combustion (2) comprenant les étapes suivantes consistant à :
a) soutirer en continu un flux volumique de gaz d'échappement de la chambre de combustion (2) d'un réacteur de fusion (1) avec au moins une pompe à lamelles métalliques (3),
b) produire un plasma à partir du flux volumique de gaz d'échappement après son entrée dans la pompe à lamelles métalliques (3),
c) séparer le plasma à la partie interne de la pompe à lamelles métalliques (3) en Isotopologues d'hydrogène gazeux et en gaz résiduels,
c1) transférer les isotopologues d'hydrogène gazeux provenant de la pompe à lamelles métalliques (3) dans une installation d'accumulation de carburant (10) au moyen d'au moins une pompe primaire (6) et d'au moins une pompe secondaire (8),
la température des isotopologues d'hydrogène étant conditionnée par au moins une barrière de vapeur (18),
c2) transférer les gaz résiduels dans une installation de retraitement de tritium (9) au moyen de la pompe primaire (6) et de la pompe secondaire (8), la température des gaz résiduaires étant conditionnée par la barrière de vapeur (18, 18'),
d) renvoyer les isotopologues d'hydrogène gazeux par l'intermédiaire de l'installation d'accumulation de carburant (10) dans la chambre de combustion (2),
e) produire un plasma à partir du flux volumique de gaz d'échappement dans la pompe à lamelles métalliques (3) par des microondes, les microondes étant introduites par couplage de l'extérieur de la pompe à lamelles métalliques (3) dans cette pompe à lamelles métalliques (3) par au moins un tube électriquement conducteur et/ou au moins une barre électriquement conductrice.

2. Procédé conforme à la revendication 1,
**caractérisé en ce que**
la fraction de gaz résiduels après la mise en oeuvre du plasma de microondes et la séparation dans la pompe à lamelles métalliques (3) par les étapes de procédé supplémentaires ci-dessous représente entre 5% et 50% de la totalité du flux volumique des gaz d'échappement, et de préférence entre 10% et 20% de ce flux :
b) utiliser une lamelle métallique (58) pour permettre de garantir la diffusion de l'hydrogène ionisé / atomique et/ou
c) établir une tension entre une grille (61) située à la partie interne de la pompe à lamelles métalliques et le boîtier de la pompe à lamelles métalliques.

3. Procédé conforme à la revendication 1 ou 2,
**caractérisé en ce que**
les isotopologues d'hydrogène sont transférés sous forme gazeuse après leur sortie de la pompe à lamelles métalliques (3) à l'installation d'accumulation de carburant (10) par la mise en oeuvre des étapes suivantes consistant à :
d) conditionner la température des isotopologues d'hydrogène dans une plage de température comprise entre -200°C et +30°C par la barrière de vapeur (18),
e) comprimer les isotopologues d'hydrogène à une pression inférieure à 1000 Pa,
la pression d'aspiration de la pompe primaire (6) chutant entre 10⁻⁸ Pa et 1000 Pa,
f) comprimer les isotopologues d'hydrogène à 1000 Pa à 2*10⁻⁵ Pa, la pression d'aspiration de la pompe secondaire (8) étant inférieure à 1000 Pa, et
g) conditionner à nouveau la température des isotopologues d'hydrogène comprimés dans une plage de température comprise entre -200°C et +30°C par la barrière de vapeur (18).

4. Procédé conforme à la revendication 1 ou 2,
**caractérisé en ce qu'**
après la sortie de la pompe à lamelles métalliques (3), les gaz résiduels sont transférés à l'installation de retraitement de tritium (9) par la mise en oeuvre des étapes suivantes consistant à :
a) conditionner la température des gaz résiduels dans une plage de température comprise entre -200°C et 30°C par la barrière de vapeur (18),
b) comprimer les gaz résiduels à une pression inférieure à 1000 Pa, la pression d'aspiration de la pompe primaire (6) chutant entre 10⁻⁸ Pa et 1000 Pa,
c) comprimer les gaz résiduels à au moins 1000 Pa jusqu'à 2*10⁵ Pa, la pression d'aspiration de la pompe secondaire (8) étant inférieure à 1000 Pa, et
d) conditionner à nouveau la température des gaz résiduels comprimés dans une plage de température comprise entre -200°C et 30°C par la barrière de vapeur (18).

5. Dispositif permettant la mise en oeuvre d'un procédé conforme à l'une des revendications 1 à 4,
comprenant
une chambre de combustion (1) d'un réacteur de fusion (2), au moins une pompe à lamelles métalliques (3), au moins quatre barrières de vapeur (18, 18'), au moins deux pompes primaires (6) et au moins deux pompes secondaires (8),
**caractérisé en ce que**
la chambre de combustion (1) du réacteur de fusion (2) est reliée à au moins une pompe à lamelles métalliques (3) de sorte qu'un flux de gaz d'échappement puisse être soutiré de la chambre de combustion (1), et pour permettre le conditionnement de la température des gaz résiduels ainsi que des isotopologues d'hydrogène gazeux après leur sortie de la pompe à lamelles métalliques (3) il est respectivement prévu au moins une barrière de vapeur (18) à l'avant de la pompe primaire (6) et au moins une barrière de vapeur (18) à l'arrière de la pompe secondaire (8), et
la pompe à lamelles métalliques comporte un tube de quartz (60) positionné coaxialement à la lamelle métallique (58) dans lequel, par l'intermédiaire d'un tube coaxial interne (53) et d'un tube coaxial externe (54) des microondes sont introduites par couplage à partir de l'extérieur par l'intermédiaire de connecteurs d'alimentation (55).

6. Dispositif conforme à la revendication 5,
**caractérisé en ce que**
la barrière de vapeur (18) comporte au moins deux étages de refroidissement.

7. Dispositif conforme aux revendications 5 et 6,
**caractérisé en ce qu'**
en tant que fluide d'actionnement de la pompe primaire (6), et de la pompe secondaire (8), il est prévu du mercure.

8. Dispositif conforme à la revendication 7,
**caractérisé en ce que**
pour permettre de vaporiser le fluide d'actionnement la pompe primaire (6) et la pompe secondaire (8) sont alimentées par un gaz rare et/ou N₂ et/ou H₂ et/ou un mélange de ces gaz, comprimé(s) à une pression comprise entre 1 MPa à 15 MPa, en particulier entre 2 MPa et 5 MPa et à une température comprise entre 80°C et 430°C, de préférence entre 130°C et 230°C.

9. Dispositif conforme à l'une des revendications 5 à 8,
comprenant les éléments suivants :
un boîtier réalisé à la partie interne de la chambre de pompe, ce boîtier étant équipé sur chaque face frontale d'un couvercle de fermeture, un des couvercles de fermeture comportant une entrée (50) du flux volumique de gaz d'échappement et un autre couvercle de fermeture situé sur la face frontale opposée comportant une sortie (56) des gaz résiduels,
le boîtier comportant au moins une ouverture radiale constituant une sortie des isotopologues d'hydrogène, et, dans le boîtier étant monté un premier tube (53) coaxialement autour de l'axe de rotation du boîtier et relié de manière amovible aux deux couvercles de fermeture de sorte que le premier tube coaxial (53) subdivise la chambre de pompe en deux volumes hermétiquement séparés, ainsi qu'un second tube coaxial (55) permettant l'introduction par couplage de microondes et s'étendant en direction longitudinale, au travers du couvercle de fermeture situé côté sortie dans le boîtier jusqu'au couvercle de fermeture situé côté entrée,
le premier tube coaxial (53) entourant totalement le second tube coaxial, et, entre la lamelle métallique (51) et le premier tube coaxial (55), une grille électriquement conductrice entourant au moins partiellement le premier tube coaxial,
**caractérisé en ce qu'**
entre la grille et le boîtier une tension comprise entre 25 Volts et 500 Volts, de préférence entre 50 V et 250 V est établie.
